# EUROPEAN PATENT APPLICATION

(11) **EP 3 868 523 A1**
(43) Date of publication of application: **25.08.2021**
(21) Application number: 20157848.1
(22) Date of filing: 18.02.2020
(51) Int. Cl.: B25J 15/00, B25J 15/02, F17C 1/00

(54) **GRIPPER OF CYLINDERS WITH A VALVE ATTACHED, WITH OR WITHOUT GUARD**

(71) Applicant: TM Norway AS, 3712 Skien (NO)
(72) Inventor: Rahbæk, Thyge Nyborg, 6400 Sønderborg (DK)
(74) Representative: Patrade A/S

(57) **Abstract**

Disclosed is a dual-gripper for picking and gripping a gas cylinder having a cylinder body extending in a longitudinal direction and a valve. The dual-gripper may be configured for attachment to an arm of an industrial robot. Further disclosed is a method of handling a gas cylinder.

## Description

### Field of the Invention

The present invention relates to dual-gripper for picking and gripping a gas cylinder having a cylinder body extending in a longitudinal direction and a valve. The dual-gripper may be configured for attachment to an arm of an industrial robot. The present invention furthermore relates to a method of handling a gas cylinder.

### Background of the Invention

Handling gas cylinders involves handling objects that must be treated with care. There is a long standing need to be able to handle gas cylinders of a multitude of different sizes, conditions and circumstances both effectively and safely.

To exemplify the long standing needs the setting may be as follows. To handle and lift heavy gas cylinders has always been a risky and dangerous job. The cartridges or cylinders are made of different materials e.g. steel, aluminum and wrapped composite cylinders.

Cylinders may vary much in size on diameter and height. The weight may vary from 2 kg to 100 kg. The size may vary from 1800 mm to 300 mm. Diameter from 0120 mm up to Ø240 mm. The cylinders may contain a volume of 0.5 liters up to 80 liters. The pressure in the cylinder can go from 50 bars up to 300 bars. Currently composite cylinders even go up to 700 - 800 bars. The content of a gas cylinder is gas, but the content may be also in a liquid state e.g. CO₂ just to name one example.

The standard industrial gases are nitrogen, argon, oxygen, CO₂, helium, hydrogen, propane, butane, acetylene, and the coolant gases. These gases are mixed in different mixtures depending on the application and different pressures. The cylinder that contains the gases is subject to a strict regulation particularly concerning the UN ADR and PI marking in EU. This means that the cylinders must undergo a periodic inspection, say every 5-10 or 15 years to ensure that the cylinder is safe for transporting gas at high pressures.

The valves are typically on top of the cylinder (i.e. the cylinder has a base for standing and at the opposite end a valve, thus the top valve) is also very special. The valve has a function to safely open and discharge the gas. The valve also serves the purpose of being used to fill the gas into the cylinder. It is fair to say that very strict rules apply to avoid that a wrong gas is charged into a wrong cylinder. Over time many accidents has occurred when a wrong gas went into a wrong cylinder. The accidents included explosions and loss of human life. The cylinders and valves are thus approved for certain gases and different pressure ratings. In example, oxygen is self-igniting under certain circumstances, a so-called adiabatic ignition. Or flammable gases like acetylene can cause huge detonations if not handled properly. Thus the valve is a delicate part of a gas cylinder and must be treated carefully during handling of the gas cylinder.

Around the cylinder valve there may be a guard that is attached to the cylinder. The guard has the function to protect the valve in case the cylinder should fall and the valve would shear off. This would cause a very dangerous situation. However, in some countries the cylinders are without a guard. This is allowed according to the so-called PI marking if the used valve can withstand certain tests such as a drop from a height. UK, Australia and some Asian countries allow such cylinders. The guard can also be used for lifting the cylinder, because the standard defines certain forces the guard must be able to withstand if pulled. The standard for guards is stated in DS/EN/ISO 11117 and the drop test for the valves is stated in DS/EN/ISO 10297. Both are harmonized and therefore mandatory.

Thus, in summary all the variants and combinations thereof result in a huge number of different cylinders that a gas handling company has to deal with. For industrial gases the number of different cylinders can easily exceed 300 different products.

Handling such gas cylinders in industrial settings is today primarily done by humans despite the aspect of the heavy workload and danger.

A further complication is that gas cylinders are typically transported from the filling sites to customers in steel pallets. The pallet may have size of a Euro pallet 1200 x 800 mm, which fully loaded weighs up to 2000 kg, and contain a selection of the outlined variety of gas cylinders. Such pallet is used for transporting the cylinders to and from the customers. Pallets come back to the industrial facility for handling e.g. filling completely mixed with different cylinders. Sometimes cylinders from competitors are in the pallet.

When the pallets arrive at an industrial site a sorting job is performed. This means that all cylinders must come out of the pallet and must be placed on other pallets say sorted in size content and valve type, so the product code is exactly the same in each pallet.

Valve outlets have to be orientated in the same direction so that access with filling adapters is enabled. If cylinders are due for maintenance or periodic inspection they are sorted out on separate pallets. The periodic inspection may be performed by other companies. Likewise, maintenance may be performed at the filling sites or alternatively dedicated companies perform the maintenance.

When the pallets are sorted, the pallets go to the filling stations where they are filled whilst on the pallets. After filling, the cylinders go back again for sorting, because the cylinders now have to be placed on the pallets for the customer or end user. Hence, at least twice the cylinders are lifted of and onto the pallets.

Thus, different cylinders may be used for industrial purposes, food applications or users. Some cylinders have guards and some do not. Medical cylinders may be used in hospitals, some without guards and some with very complex valves, meaning that for the patient there is different access and information.

Early attempts have been presented to automate the handling of gas cylinders. One solution is a portal loader that has a robot arm that comes from the top and grabs the cylinder in the guard. The portal robot then lifts the cylinder up vertically and moves the cylinder to another pallet or a storage area.

Another solution exists where the cylinder is grabbed from the side with a vacuum gripper. However, this has caused some problems because of corrosion and different temperatures of the cylinder. A problem with very cold cylinders can occur when a cylinder is emptied very fast and this is often done when the cylinders are standing in the yard on the pallet. Some cylinders cannot be top-filled, but have to be empty before filling of a new gas. Particularly the medical and food industry requires that.

### Object of the Invention

It is an objective of the present disclosure to provide a reliable and effective way of handling objects, primarily elongated objects with an operational end, such as gas cylinders with a valve at one end. Typically this means handling gas cylinders with a base and a valve at a top end.

It is an objective to enable safe handling of gas cylinders of a variety of types and/or circumstances.

### Description of the Invention

An object is achieved by a method for handling a gas cylinder with a base placed on a support and a cylinder body with a valve.

The method comprises acts as will be described.

There is an act of providing a dual-gripper comprising a picking gripper and a large gripper arranged on a floor-based industrial robot, a wall mounted or sealing/roof mounted industrial robot. The dual-gripper may be as herein disclosed. Alternatively, a dual-gripper having an arrangement for performing a linear movement, typically a vertical lift may be used. Such picking gripper may be as herein disclosed. Alternatively, a string arrangement may be used to pick up a gas cylinder. There is a gripper for firmly grapping or gripping the cylinder. The gripper for firmly gripping may be described as a large gripper, a firm gripper, or a cylinder body gripper. Such large gripper may be as herein disclosed. Alternatively, the large gripper may be vacuum or string based.

The industrial robot may be floor based that is mounted on the floor or drivable on the floor. The industrial robot may be wall mounted or roof/sealing mounted. Typically the robot has an arm that operates from within a certain base.

There is an act of positioning the picking gripper above the valve. This act may be performed by controlling or operating the robot arm or by a control system identifying the position of the valve, a valve area or say the handle or guard associated with the valve.

There is an act of engaging the picking gripper to the valve. The act of engaging may be to a part of the valve or a part associated with the valve such as a valve handle or guard.

There is an act of lifting the gas cylinder with the picking gripper so the base is off the support. As such the picking gripper may be actuated to lift or to ease the gas cylinder from the support being a floor, a pallet or the like.

There is an act of gripping the cylinder body with the large gripper. Thereby, a firm grip is applied to the gas cylinder so that the gas cylinder can be handled according to the circumstances.

There is an act of moving the gas cylinder with the industrial robot. Such moving may be a rotation, a displacement or any other say substantial move.

The industrial floor-based robot may be fixed or in itself movable. In principle the gripper or dual-gripper may be applied to a robot arranged on a portal.

It is understood that the gripper and industrial robot is arranged to disengaging the picking gripper from the valve, and disengaging the large gripper from the cylinder body when the move is complete as will be described.

The acts enable and greatly improve the handling capacity since the acts allow for handing a variety of cylinder products as outlined in the background.

In an aspect, the act of engaging the picking gripper is performed by engaging to a hand wheel of the valve. The act of engaging may be to a guard of the valve. Alternatively, a string or loop may be placed around a handle or guard.

In an aspect, the act of gripping is preceded by an act of displacing the gas cylinder towards the large gripper whilst being engaged by the picking gripper. This allows the gas cylinder to be moved in a controlled and safe manner to the large gripper and for the large gripper to firmly engage or grip around the cylinder body.

In an aspect, there is a further act of releasing the gas cylinder selectively in a substantially horizontal orientation or in a substantially vertical orientation. It is understood that the industrial robot has an operational capacity of rotating the gripper with the gas cylinder firmly engaged. The robot may be capable of rotating in three planes i.e. to orient the gas cylinder in any orientation. Thus, the release of the cylinder may optionally be in a horizontal direction or an orientation to stack the cylinder. The release of the cylinder may optionally be in a vertical direction or i.e. in an up-right position. In fact some gas cylinders may be released in a vertical orientation whilst other gas cylinders may be released in a horizontal orientation.

In an aspect, the act of releasing the gas cylinder is in a substantially vertical orientation performed by orienting the gas cylinder substantially vertically by the industrial robot whilst held by the large gripper.

There is an act of engaging the picking gripper to the valve. By griping the valve, all gas cylinders may be picked or selected for further handling. Engaging may also be to a handle on the valve. Thus, all gas cylinders with a handle may be handled. Engaging may also be to a guard. Thus, all gas cylinders with a guard may be handled. Using a picking gripper as disclosed herein may allow for a variety of valves, valves with handles and valves with guards to be handled.

There is an act of lowering the gas cylinder by the picking gripper so the base is at a designated position. Such lowering by the picking gripper allows for safe and precise positioning of the gas cylinder.

An objective is achieved by a method of placing a base of a gas cylinder at a designated position, the gas cylinder having a cylinder body with a valve. The method comprises acts as follows.

There is an act of providing a dual-gripper comprising a picking gripper and a large gripper on a floor based industrial robot. The robot may be as disclosed herein.

There is an act of moving the gas cylinder to the vicinity of the designated position with the industrial robot.

There is an act of orienting the gas cylinder substantially vertically with the industrial robot whilst held by the larger gripper. Thus, a gas cylinder may be placed up-right.

There is an act of engaging the picking gripper to the valve. There is an act of lowering the gas cylinder with the picking gripper so the base is at a designated position. Thus, the gas cylinder is placed precisely and carefully.

In an aspect, the act of engaging the picking gripper to the valve may be performed by sensing the relative positioning between the picking gripper and the gas cylinder by sensory means. Such sensing may be analogue or mechanical by using a movable stick. The sensing may be by a laser arrangement giving the actual distance during the movement.

In an aspect, the act positioning the picking gripper above the valve is performed by recognizing a position of a valve on a gas cylinder by use of an image recognition system.

An objective is achieved by a dual-gripper for picking and gripping a gas cylinder having a cylinder body extending in a longitudinal direction and a valve. The dual-gripper may be configured for attachment to an arm of a floor-based, wall mounted or roof mounted industrial robot.

The above acts may be performed by use of a gripper having a parallel movement on each gripper finger of 25 mm, and at the same time keeping a width of the entire gripper that is less than say 135 mm or less than say 135-145 mm. This allows the gripper to get in between the bottles standing next to each other. This may be achieved by the use of small arms that move a gripper and the two gripping fingers running synchronously about the center.

Traditional parallel grippers are not available in a width of 140 mm with 25 mm travel on each gripper arm and a lifting capacity of more than 100 kg.

In example, with one small cylinder having a diameter of Ø140 mm and one next to this slightly larger than Ø140 mm, the gripper can still come "in" and pick it up.

The picking gripper is thus configured to engage with a valve, a valve part such as a handle or a guard. As such the picking gripper may selectively engage with the valve itself, a handle or a guard.

Furthermore, the gripper may be provided with a sensor, which can see or feel the height of the bottle to avoid collision. This can be either a laser or analog rangefinder that hits the valve before the gripper arm hits the valve. This improves the location found with an image recognition system, 3D scanner, or vision system.

Surprisingly tests have shown that it is possible to lift the cylinder in the valve hand wheel without damaging the valve. The hand wheel is a very good means for lifting because it is standardized in ISO 10297.

The used gripper may also be modified to lift in both the guard and the hand wheel. This might be needed because some cylinders are unguarded.

The gripper may be an arrangement with a string or loop that can be loosened, and twined around the handle, the guard or the valve body. The arrangement will be able to tighten the string or loop and then lift the gas cylinder. The lift may be performed by winding the string or by means of an actuator arrangement.

The gripper is unique because it has a picking function where it picks and moves the cylinder away from the others and then clamps with high force. This feature is very unique, as you can pick among others close to each other and then move it away from the others and then clamp with a big gripper on the diameter of the cylinder.

In example, a dual-gripper may be devised as will be disclosed. The dual-gripper comprises a picking gripper, which picking gripper may be isolated and used separately. The dual gripper comprises a gripper which is described as a large gripper, which large gripper may be isolated and used separately.

An objective is achieved by a dual-gripper for picking and gripping a gas cylinder having a cylinder body extending in a longitudinal direction and a valve. The dual-gripper may be configured for attachment to an arm of a floor-based industrial robot.

The dual-gripper comprises the following features. There is a large gripper comprising large gripping means for gripping around a gripping axis.

The gripping means are adapted for gripping around the cylinder body of a gas cylinder and the gripping means have a high gripping strength, such that the gas cylinder is secure during movement caused by the floor-based industrial robot. A stronger grip of the gripping means enable faster movement of the industrial robot and thus, faster movement of the gas cylinder. Thereby, the dual-gripper and industrial robot can handle more gas cylinders per hour, which increases efficiency.

In an embodiment, the gripping means may be a pair of opposing gripper arms connected to a gripper arm rail, thereby enabling the gripper arms to displace perpendicular to the gripping axis. The shape of the pair of gripper arms is complementary to a cylinder body. The embodiment of the gripping means enable a strong friction connection between the pair of gripper arms and the gas cylinders to be handled as one or both gripper arms may be actuated by one or two actuators, which can create a large force directed towards the gripping axis.

There is a picking gripper configured to engage with a valve of a gas cylinder or valve guard and to displace the gas cylinder in a picking direction substantially parallel to the gripping axis.

Thus, the picking direction of the picking gripper is along a longitudinal axis of the gas cylinder, while the large gripper is designed to grip around the cylinder body of the gas cylinder i.e. around the longitudinal axis of the gas cylinder. The skilled person would realise that the large gripper requires free space around the cylinder body to be able to grip around the cylinder body, however the picking gripper, picking along the longitudinal axis of the gas cylinder, does not require space around the cylinder body.

Thereby, the picking gripper enables the dual-gripper to specifically pick a gas cylinder positioned among a group of gas cylinders positioned with a mutual spacing, which otherwise would not allow the large gripper to grip the gas cylinder without displacing the other gas cylinders.

An axial load test of a MGE Gland nut 512K5005 shows that the valve and the hand wheel can withstand a lifting force equivalent to 400 kg and 250 kg, respectively. The valve guard can withstand a lifting force higher than 400 kg. The test for the guard on axial force is defined in DS/EN/ISO 11117, and the requirement is always related to the total mass of a cylinder with content. This allows the picking gripper to lift the gas cylinder by the valve, the hand valve or the valve guard; however the grip does not allow fast movement of the gas cylinder.

The hand wheel is excellent for lifting, because it is standardized in DS/EN/ISO 10297.

Thus, the dual-gripper becomes versatile as it can be used in more situations due to the picking gripper, and it increases efficiency as the large gripper enables fast movement.

In an aspect, the picking gripper extends along the picking direction. The picking gripper comprises along the picking direction.

A linear picking actuator being operatively connected to a pair of lower arms having rotation points on opposing sides of the picking axis. The pair of lower arms operatively connected to a pair of opposing sleds being slideable connected to a rail extending perpendicular to the picking direction. The sleds slide by the rotation of the pair of lower arms. The pair of sleds having opposing picking fingers extending substantially parallel to the picking direction and being adapted for engaging with a valve, a hand wheel or a guard.

When the opposing sleds move towards the picking axis, the picking fingers move towards the picking axis. The picking fingers are in this embodiment designed to grip the hand wheel and the picking gripper will engage the hand wheel.

In another embodiment, when the opposing sleds move away from the picking axis, the picking fingers move away from the picking axis. The picking fingers are in this embodiment designed to grip the valve guard and thus the gas cylinder is engaged.

In both embodiments, the linear movement caused by the linear picking actuator along the picking direction is translated through the lower arms and the sleds to a movement, which is perpendicular to the gripping direction. Thereby, the picking gripper is enabled to have an axial extension (i.e. width) from the picking direction, which is shorter than the width of standard gas cylinders with a width of 140 mm. The above mentioned features enable the picking gripper to have a width equal to or below 135 mm.

Thereby, the dual gripper can engage with a valve, hand wheel or valve guard of a gas cylinder which is in direct contact with neighbouring gas cylinders, wherein the length of the neighbouring gas cylinders is larger than the gas cylinder to be engaged.

This increases the versatility of the dual-gripper even further as it can be used to move gas cylinders having varying heights.

Furthermore, the picking gripper must often engage the hand wheel, where the hand wheel is protected by the valve guard. This limits the total room in which the picking gripper operates and thus picking fingers is further moveable. The rail or rails and the sleds are designed to enable the picking fingers to travel about 25 mm, thereby the picking fingers can engage a hand wheel protected by a valve guard. The travel of 25 mm is possible while keeping the width below 135 mm.

In an aspect, the dual-gripper may further comprise a linear displacement actuator connected to the picking gripper and configured for displacement of the picking gripper substantially perpendicular to the picking direction between the gripping axis and an extended picking position.

Thereby, the dual-gripper becomes more versatile as the picking gripper being positioned in the extended picking position can engage and lift a gas cylinder positioned at a center of a group of gas cylinders without the large gripper accidentally touching or engaging any one of the gas cylinders in the group of gas cylinders. This will further increase the versatility of the dual-gripper.

If the picking gripper has a width equal to or smaller than 135 mm, which is obtainable by the features previously described, the linear displacement actuator connected to the picking gripper will make the dual-gripper even more versatile, since the linear displacement actuator will allow the picking gripper to engage and lift a gas cylinder positioned in frictional connection with a group of gas cylinders completely surrounding the gas cylinder to be engaged and lifted.

In an aspect, the picking gripper may further comprise sensor means for sensing the relative positioning between the picking gripper and a gas cylinder.

The movement of the picking gripper when the picking gripper is close to the valve, valve guard or hand wheel, and especially the movement of the picking fingers has to be precise for the dual-gripper to properly engage and lift the gas cylinder.

The sensor means enable the picking gripper but also the industrial robot, to make minor adjustments to the positioning of the picking gripper.

The sensor means may be a touch sensor.

The touch sensor may comprise a piezo element.

The sensor means may be a distance sensor.

The distance sensor may be a laser distance meter.

In an embodiment, the sensory means are positioned between the sleds and thus, the picking fingers thereby the sensory means can easily detect the valve, hand wheel and/ or valve guard. This decreases the risk of an insufficient engagement of the picking fingers and thus increases the reliability. Furthermore, the entire system can move faster due to the information gained by the sensory means.

In an aspect, the picking actuator comprises a pair of upper arms interconnecting the picking actuator and the pair of lower arms, the pair of upper arms being displaceable between a picking position, where the pair of upper arms are perpendicular to the picking direction and a release position where the upper arms are extending substantially towards the picking actuator.

The disclosed acts may be implemented as computer instructions. As such there may be a computer program product comprising instructions to cause a floor based industrial robot with a dual-gripper to execute the acts as disclosed.

In an aspect, a computer-readable medium having stored thereon the computer program mentioned.

### Description of the Drawing

- Fig. 1: illustrates a picking gripper engaging a hand wheel of a gas cylinder;
- Fig. 2: illustrates a dual arm and the movement of a picking gripper relative to the large gripper;
- Fig. 3: illustrates a cross section of the picking gripper;
- Fig. 4: illustrates a front view of the gripper;
- Fig. 5: illustrates a system handling a gas cylinder;
- Fig. 6: illustrates the system engaging a valve or guard;
- Fig. 7: illustrates the system lifting the gas cylinder by the valve or guard
- Fig. 8: illustrates the system gripping the cylinder body;
- Fig. 9: illustrates a method for handling a gas cylinder; and
- Fig. 10: illustrates a method of placing a base of a gas cylinder at a designated position.

| Item | Reference |
|---|---|
| Dual-gripper | 10 |
| Linear displacement actuator | 20 |
| Displacement actuator rod | 22 |
| Robot attachment part | 30 |
| Designated position | 70 |
| Support | 80 |
| Floor-based industrial robot | 90 |
| Arm | 92 |
| Robot actuator | 94 |
| Picking gripper | 100 |
| Picking direction | 102 |
| Picking position | 104 |
| Picking gripper back plate | 106 |
| Picking gripper extension section | 108 |
| Linear picking actuator | 110 |
| Picking actuator rod | 112 |
| Upper arms | 120, 120I, 120II |
| Parallel position | 122 |
| V- position | 124 |
| Lower arm | 130, 130I, 130II |
| Rotation point | 132, 132I, 132II |
| Sled | 140, 140I, 140II |
| Rail | 142, 142I, 142II |
| Slide slots | 144, 144I, 144II |
| Picking finger | 150, 150I, 150II |
| Finger tip | 152, 152I, 1522 |
| Large gripper | 300 |
| Gripping axis | 302 |
| Gripping means | 310 |
| Gripper arms | 320, 320I, 320II |
| Gripper arm rail | 330 |
| Sensory means | 500 |
| Image recognition system | 550 |
| Gas cylinder | 700 |
| Base | 710 |
| Cylinder body | 720 |
| Longitudinal direction | 722 |
| Valve | 730 |
| Halve guard | 732 |
| Hand wheel | 734 |
| Vertical orientation | 750 |
| Horizontal orientation | 760 |
| Method for handling | 1000 |
| Providing | 1100 |
| Positioning | 1200 |
| Recognizing | 1210 |
| Engaging | 1300 |
| Sensing | 1310 |
| Lifting | 1400 |
| Gripping | 1500 |
| Displacing | 1600 |
| Moving | 1700 |
| Releasing | 1800 |
| Orienting | 1810 |
| Lowering | 1900 |
| Method of placing | 2000 |

### Detailed Description of the Invention

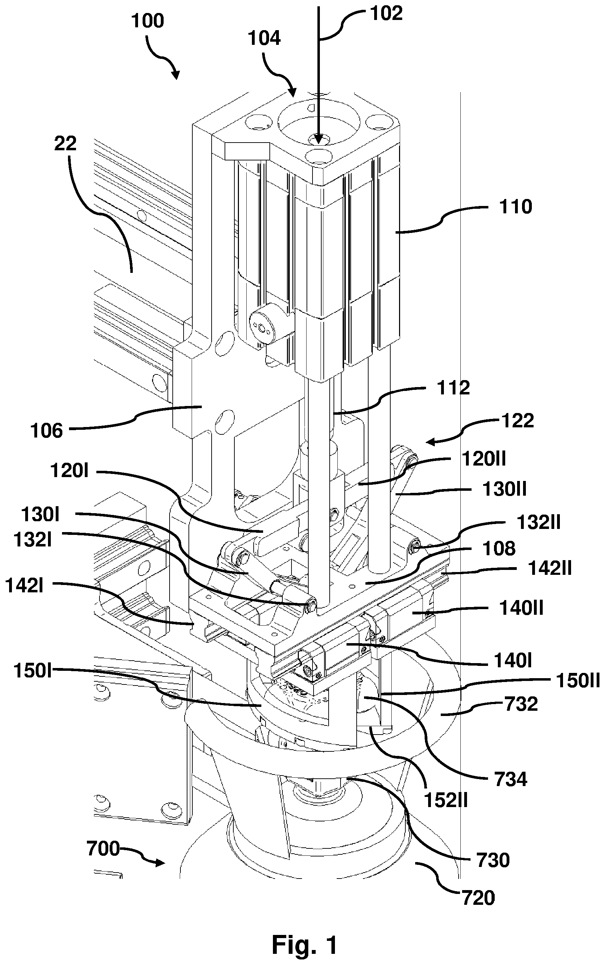

Fig. 1 illustrates a picking gripper 100 engaging a hand wheel 734 of a gas cylinder 700.

The picking gripper 100 is positioned in an extended picking position 104 by a not shown linear displacement actuator 20, however the displacement actuator rod 22 actuated by the linear displacement actuator is shown and the displacement actuator rod 22 is extended and thus, the picking gripper 100 in the extended picking position 104. The picking gripper 100 extends along a picking direction 102 and the picking gripper 100 comprises a picking gripper back plate 106 parallel to the picking direction 102 and is connected to the displacement actuator rod 22.

The picking gripper 100 comprises along the picking direction 102;
- a linear picking actuator 110 being operatively connected by a picking actuator rod to
   a pair of upper arms 120I, 120II. The pair of upper arms 120I, 120II being displaceable between a parallel position 122, where the pair of upper arms 120I, 120II are perpendicular to the picking direction 102 and a (not shown) V- position 124 where the upper arms 120I, 120II are extending substantially towards the picking actuator 110.

The pair of upper arms 120I, 120II interconnect the picking actuator 110 and
- a pair of lower arms 130I, 130II having rotation points (132I, 132II) on opposing sides of the picking axis 102, the pair of lower arms (130I, 130II) operatively connected to
- a pair of opposing sleds 140I, 140II being slideable connected to two rails (142I, 142II extending perpendicular to the picking direction 102, wherein the sleds 140I, 140II slide by the rotation of the pair of lower arms 140I, 140II, the pair of sleds 140I, 140II having opposing picking fingers 150I, 150II extending substantially parallel to the picking direction 102 and being adapted for engaging with a valve 730, a hand wheel 734 or a valve guard 732. In the present embodiment the picking fingers 150I, 150II have finger tips 152 extending towards the opposite finger tips 152 for engaging below the hand wheel 734.

The picking gripper 100 translates a linear movement of the picking actuator rod 112, which is parallel and in line with the picking direction 102, to a movement of the picking fingers 150I, 150II, which is perpendicular to the picking direction 102. This design enables that the distance from the picking direction 102, which is the center of the picking gripper 100, to the radially outer most part can be minimized to a distance, which is shorter than the diameter of a cylinder body 720 of the gas cylinders 700.

The diameter or width of the cylinder body 720 is standardized and for many cylinder bodies the width is 140 mm. The picking gripper 100 of the invention can have a width below 135 mm. This will make the picking gripper 100 substantially more versatile. If several gas cylinders 700 having a common width of 140 mm and different heights are positioned in mutual contact, then the picking gripper 100 of the invention can pick the shortest gas cylinder 700 as the width of the picking gripper 100 enables the picking gripper to move between the gas cylinders 700.

The picking gripper 100 has distal to the linear picking actuator 110 a picking gripper extension section 108. The linear picking actuator 110 and the picking gripper extension section 108 are both connected to the picking gripper back plate 106. Furthermore, two stabilizing rods distal to the picking gripper back plate 106 extend between the linear picking actuator 110 and the picking gripper extension section 108. The two stabilizing rods stabilize the picking gripper 100 and enable the picking gripper 100 to lift heavier gas cylinders 700, compared to a picking gripper 100 without said stabilizing rods.

The picking gripper extension section 108 extends substantially perpendicular to the picking direction 102. The picking gripper extension section 108 comprises the two rails 142I, 142II extending in parallel, the two rails 142I, 142II cause the movement to be more stable compared to a single rail.

The lower arms 130I, 130II are both rotationally connected to the picking gripper extension section 108 and this connection defines the rotation point 132I, 132II of each lower arm 130I, 130II.

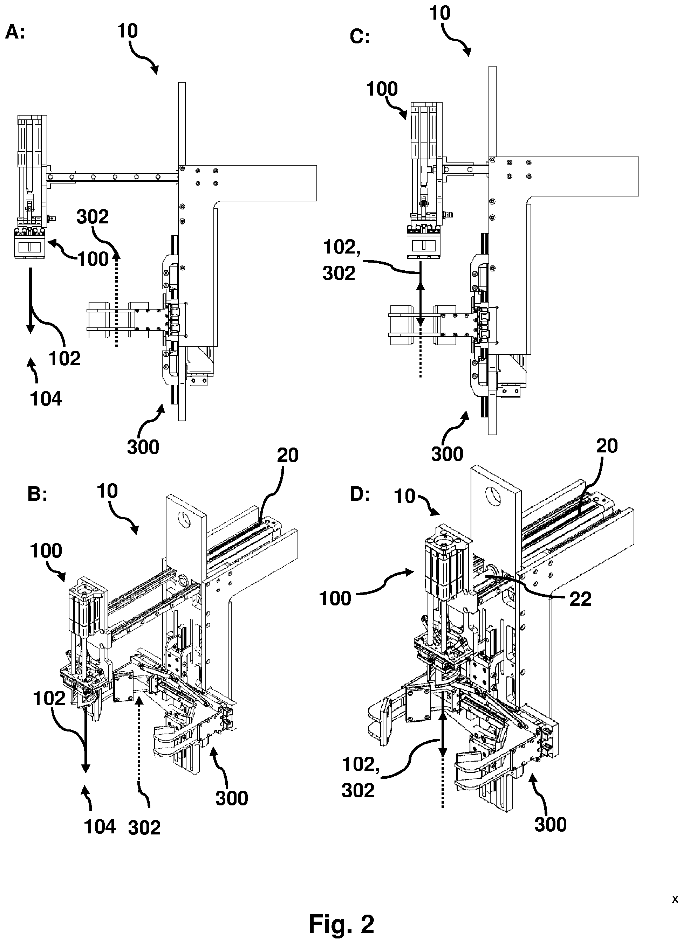

Fig. 2 illustrates a dual-gripper 10 and the movement of a picking gripper 100 relative to a large gripper 300. The dual-gripper 10 comprises both the picking gripper 100 having a picking direction 102 and the large gripper 300 having a gripping axis 302.

Fig. 2A and 2B disclose the dual-gripper 10, where the picking gripper 100 is in a picking position 104. In this position, the gripping axis 302 and the picking direction 102 are parallel but far apart.

Fig. 2B discloses the linear displacement actuator 20, however the displacement actuator rod 22 is not illustrated although it is present, as shown in fig. 2D.

Fig. 2C and 2D disclose the dual-gripper 10, where the picking gripper 100 and picking direction 102 are substantially in line with the gripping axis 302.

The skilled person would know that it is not essential for the picking direction 102 to be in line with the gripping axis 302, thus there may be design deviations. However, the solution will typically be the most simple due to symmetry.

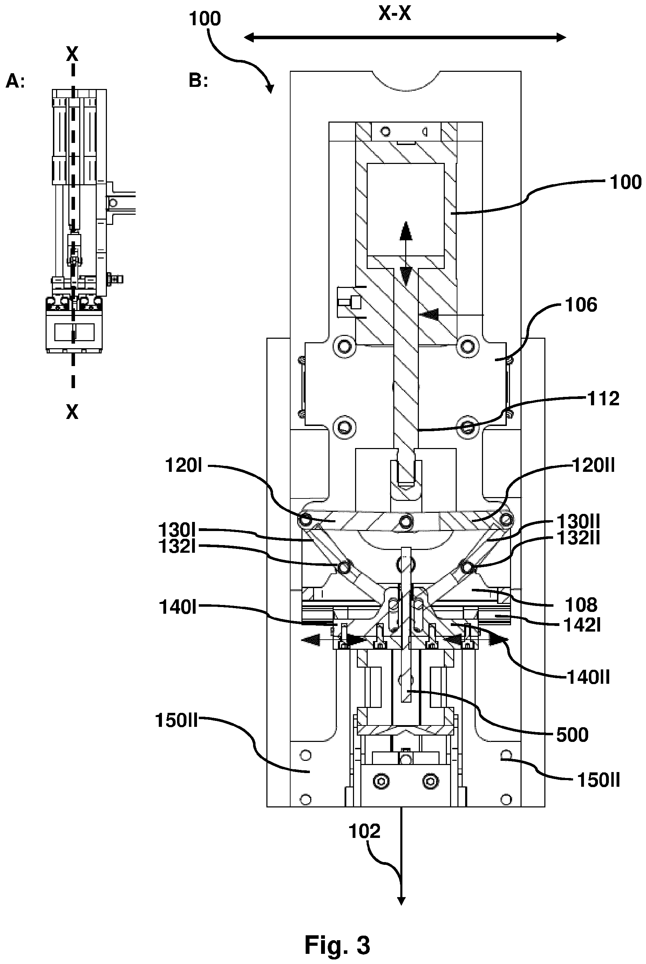

Fig. 3 illustrates a cross section of a picking gripper 100. Fig. 3A discloses the plane of the cross-section and fig. 3B discloses the cross-section.

The picking gripper 100 extends along a picking direction 102 and the picking gripper 100 comprises a picking gripper back plate 106, which is parallel to the picking direction 102 and operatively connected to linear displacement actuator 20.

The picking gripper 100 comprises along the picking direction 102; a linear picking actuator 110 being operatively connected by a picking actuator rod to a pair of upper arms 120I, 120II. The pair of upper arms 120I, 120II being displaceable between a parallel position 122, where the pair of upper arms 120I, 120II are perpendicular to the picking direction 102 and a (not shown) V- position 124 where the upper arms 120I, 120II are extending substantially towards the picking actuator 110. The pair of upper arms 120I, 120II interconnect the picking actuator 110 with a pair of lower arms 130I, 130II having rotation points (132I, 132II) on opposing sides of the picking direction 102, the pair of lower arms (130I, 130II) operatively connected to a pair of opposing sleds 140I, 140II being slideable connected to two rails 142I, 142II extending perpendicular to the picking direction 102. In the cross-section only one of the two rails are shown. The sleds 140I, 140II slide by the rotation of the pair of lower arms 140I, 140II, the pair of sleds 140I, 140II having opposing picking fingers 150I, 150II extending substantially parallel to the picking direction 102 and being adapted for engaging with a valve 730, a hand wheel 734 or a valve guard 732.

The picking gripper 100 translates a linear movement of the picking actuator rod 112, which is parallel and in line with the picking direction 102, to a movement of the picking fingers 150I, 150II, which is perpendicular to the picking direction 102 as shown by the dual arrows.

The picking gripper 100 has distal to the linear picking actuator 110 a picking gripper extension section 108. The linear picking actuator 110 and the picking gripper extension section 108 are both connected to the picking gripper back plate 106.

The picking gripper extension section 108 extends substantially perpendicular to the picking direction 102. The picking gripper extension section 108 comprises the two rails 142I, 142II extending in parallel, the two rails 142I, 142II causes the movement to be more stable compared to a single rail.

The lower arms 130I, 130II are both rotationally connected to the picking gripper extension section 108 and this connection defines the rotation point 132I, 132II of each lower arm 130I, 130II.

The lower arms 130I, 130II are respectively connected to the sleds 140I, 140II by slide slots 144I, 144II allowing an end of the respective lower arms 130I, 130II to slide in the slide slot 144I, 144II when the lower arms 130I, 130II rotate and the sleds 140I, 140II move perpendicular to the picking direction 102.

The picking gripper 100 comprises a sensory means 500 extending in the present embodiment in line with the picking direction 102 and in between the respective sleds 140I, 140II and picking fingers 150I, 150II. The sensory means 500 is connected to the picking gripper extension section 108.

The sensory means 500 is connected to the picking gripper extension section 108.

The sensory means 500 is in the present embodiment a touch sensor, such as but not limited to a piezo electric sensor.

The sensory means 500 may in other embodiments be an optical sensor such as a distance sensor.

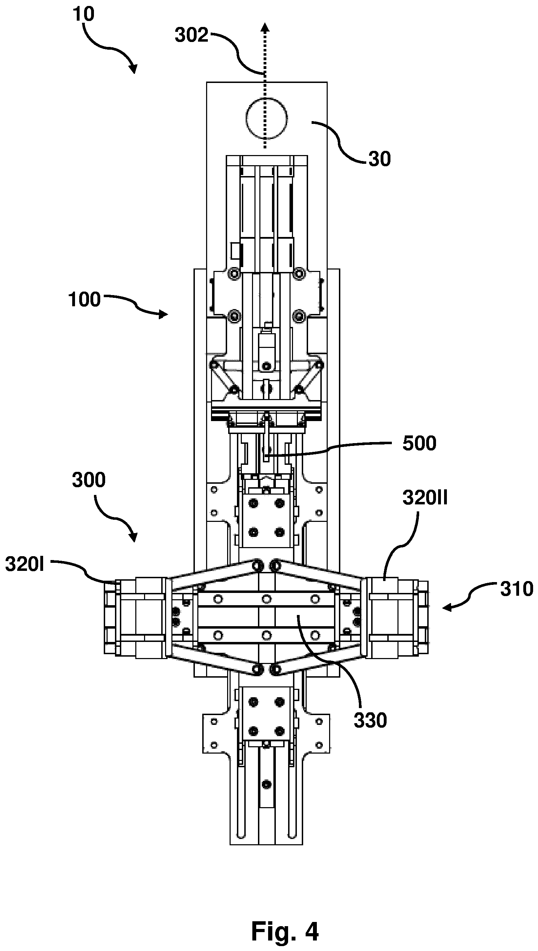

Fig. 4 illustrates a front view of a dual-gripper 10 comprising a picking gripper 100 and a large gripper 300. The picking gripper 100 is a picking gripper as previously described in Fig. 1 or 3.

The dual-gripper 10 comprises a robot attachment part 30 for attachment of the dual-gripper 10 to a floor-based industrial robot 90 (not shown).

The large gripper 300 having a gripping axis 302 defined by the gripping means 310. In the present embodiment the gripping means 310 are a pair of gripper arms 320I, 320II connected to a gripper arm rail 330 enabling the gripper arms 320I, 320II to displace perpendicular to the gripping axis 302.

The shape of the pair of gripper arms 320I, 320II are complementary to a cylinder body 720.

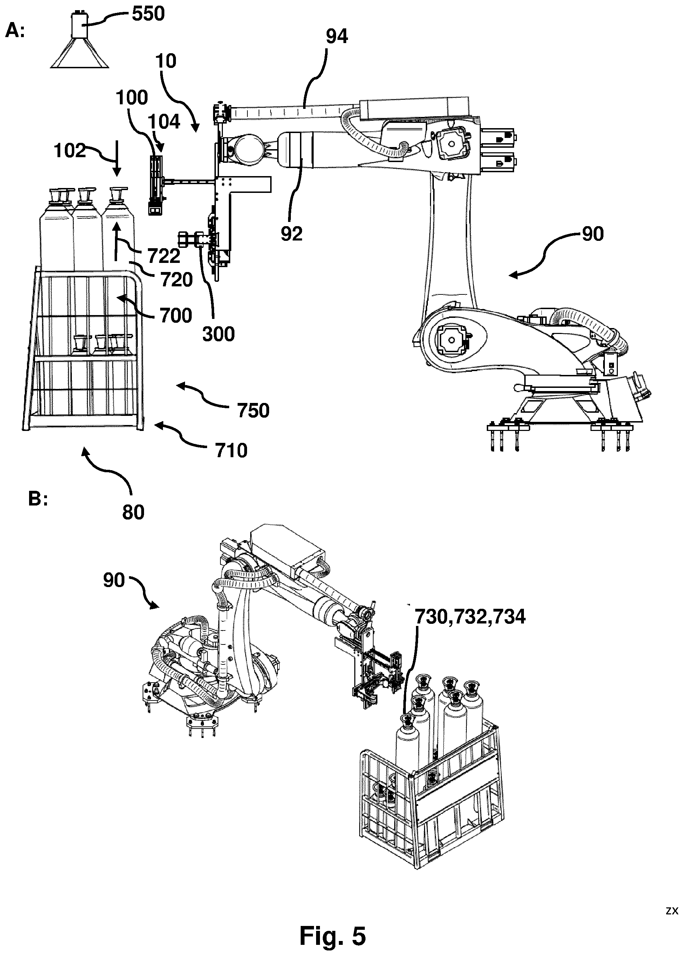

Fig. 5-8 discloses handling of a gas cylinder 700 by a system comprising a dual-gripper 10 and a floor-based industrial robot 90.

The system in Fig. 5A is disclosed with an image recognition system 550 for determining a position of a gas cylinder 700 to be handled. The image recognition system 550 is optional and therefore only disclosed in fig. 5A as the determination of the position of the gas cylinder 700 to be handled can be done, or in some cases the gas cylinder 700 or gas cylinders 700 are arranged in an orderly and well-known pattern thus making the image recognition system 550 redundant.

The floor-based industrial robot 90 comprises an arm 92 holding a robot attachment part of the dual-gripper 10.

The floor-based industrial robot 90 further comprises a robot actuator attached to the outer rotational part of the arm 92 holding the dual-gripper 10, thereby allowing rotation such that the dual-gripper 10 can pick a gas cylinder 700 in a vertical orientation 750 and in a horizontal orientation 760.

Likewise, the system may release the gas cylinder 700 selectively in a substantially horizontal orientation 750 or in a substantially vertical orientation 760 or any position between these two extremes.

The gas cylinder 700 having a cylinder body 720 extending along a longitudinal direction 722, wherein the gas cylinder 700 in one end comprises a valve 730 with a hand wheel 734 protected by a valve guard 732. The gas cylinder 700 has a base 710 positioned on a support 80. The gas cylinder 700 to be handled is positioned next to a plurality of gas cylinders 700, which have the same width but are at different heights.

Fig. 5A-B illustrates the system handling the gas cylinder 700.

The image recognition system 550 identifies the gas cylinder 700 to be handled.

In other embodiments the position of the gas cylinder 700 to be handled is known from other sources, thus making the image recognition system 550 redundant.

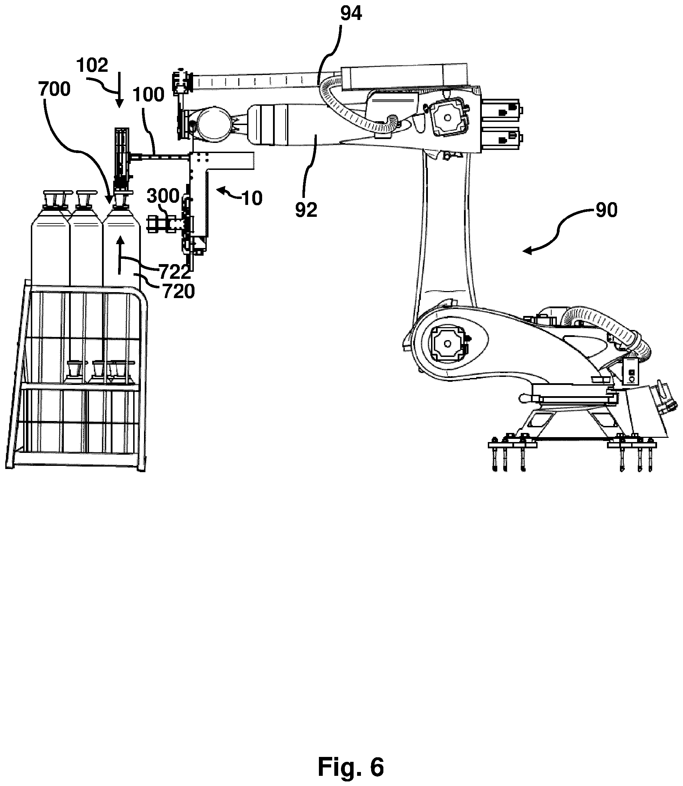

Fig. 6 illustrates the system engaging a valve 730 or guard 732 of the gas cylinder 700.

The picking gripper 100 is in a picking position 104 and the picking gripper 100 has a picking direction which is substantially in line with the longitudinal direction 722 of the gas cylinder 700. The picking fingers 150 engage the valve 730 or the guard 732 and the gas cylinder 700 can be lifted.

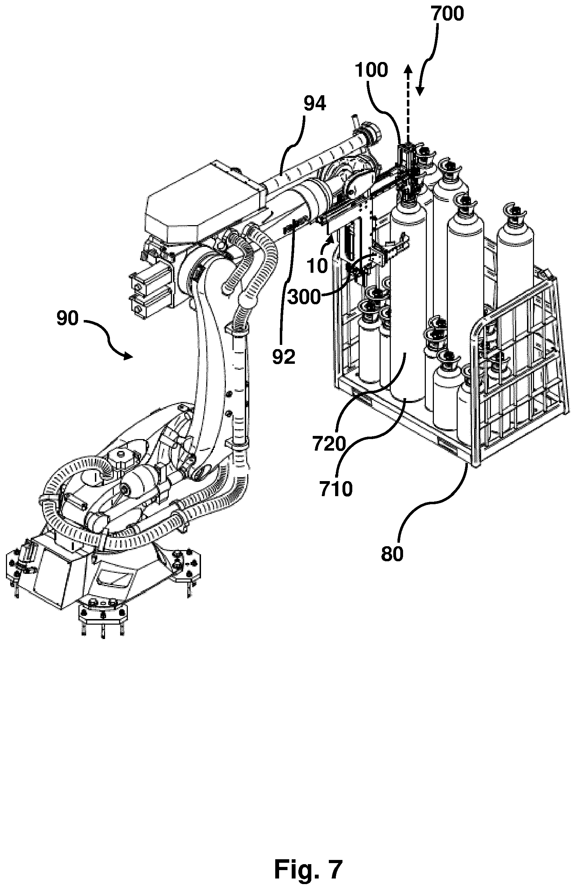

Fig. 7 illustrates the system lifting the gas cylinder 700 with the picking gripper 100 such that the gas cylinder 700 is not in touch with the support 80.

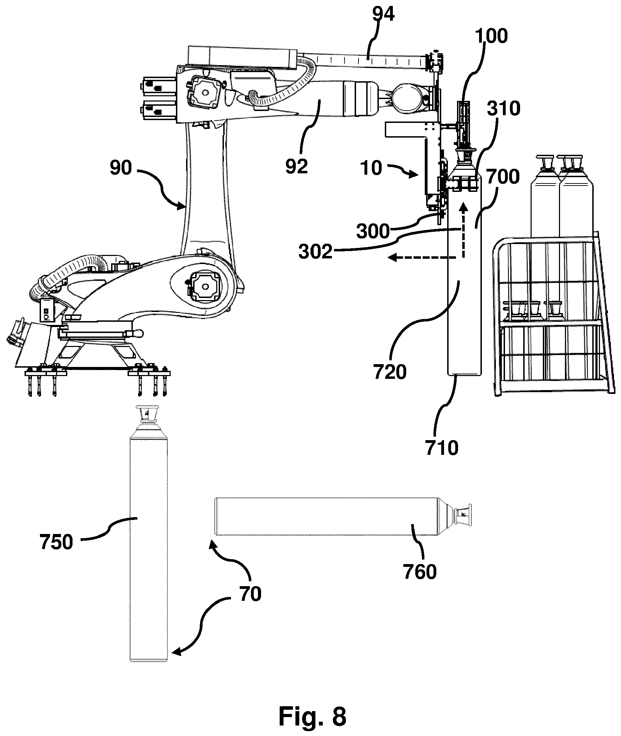

Fig. 8 illustrates the system gripping the cylinder body 720. The picking gripper 100 is displaced perpendicular to the gripping axis 302 towards the large gripper 300. This may be done as shown in fig. 2A-D.

The large gripper 300 grips the cylinder body 720 using gripping means 310, which may be as shown in fig. 4.

The system can move the gas cylinder 700 with the floor-based industrial robot 90 to a designated position 70, which as shown in the figure may be a position wherein the gas cylinder 700 has a vertical orientation 750 or a horizontal orientation 760.

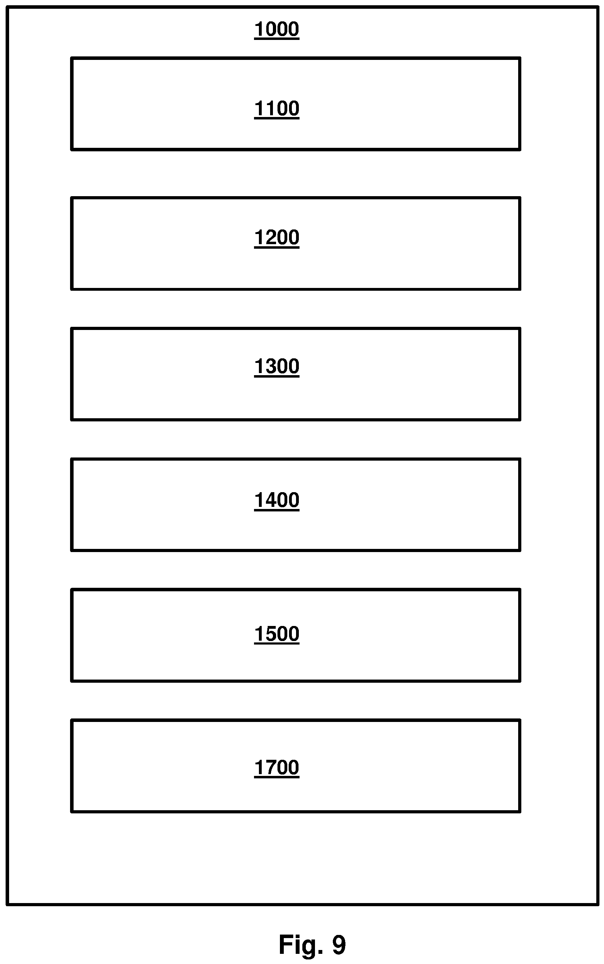

Fig. 9 illustrates a method for handling 1000 a gas cylinder 700. The method 1000 is illustrated in fig. 5-8.

The method for handling 1000 the gas cylinder 700 with a base 710 placed on a support 80 and a cylinder body 720 with a valve 730, the method 1000 comprising acts of:
- providing 1100 a dual-gripper 10 comprising a picking gripper 100 and a large gripper 300 arranged on a floor-based industrial robot 90;
- positioning 1200 the picking gripper 100 above the valve 730;- engaging 1300 the picking gripper 100 to the valve 730;
- lifting 1400 the gas cylinder 700 by the picking gripper 100 so the base 710 is off the support 80;
- gripping 1500 the cylinder body 720 with the large gripper 300; and
- moving 1700 the gas cylinder 700 by the industrial robot 90.

In an embodiment, the act of engaging 1300 the picking gripper 100 is performed by engaging 1300 to a hand wheel 734 of the valve 730.

In an embodiment, the act of gripping 1500 is preceded by an act of displacing 1600 the gas cylinder 700 towards the large gripper 300 whilst being engaged by the picking gripper 100. An example of this act is shown in Fig. 2A-2D.

In an embodiment, the method comprises an act of releasing 1800 the gas cylinder 700 selectively in a substantially horizontal orientation 750 or in a substantially vertical orientation 760 as shown in Fig. 8.

In an embodiment, the act of releasing 1800 the gas cylinder 700 is in a substantially vertical orientation 750 performed by
- orienting 1810 the gas cylinder 700 substantially vertically with the industrial robot 90 whilst held by the large gripper 300;
- engaging 1300 the picking gripper 100 to the valve 730; and
- lowering 1900 the gas cylinder 700 by the picking gripper 100 so the base 710 is at a designated position 70.

In an embodiment of the method 1000 the act of engaging 1300 the picking gripper 100 to the valve 730 is performed by sensing 1310 the relative positioning between the picking gripper 100 and the gas cylinder 700 by sensory means 500.

In an embodiment of the method 1000 the act positioning 1200 the picking gripper 100 above the valve 730 is performed by recognizing 1210 a position of a valve 730 on a gas cylinder 700 by use of an image recognition system 550.

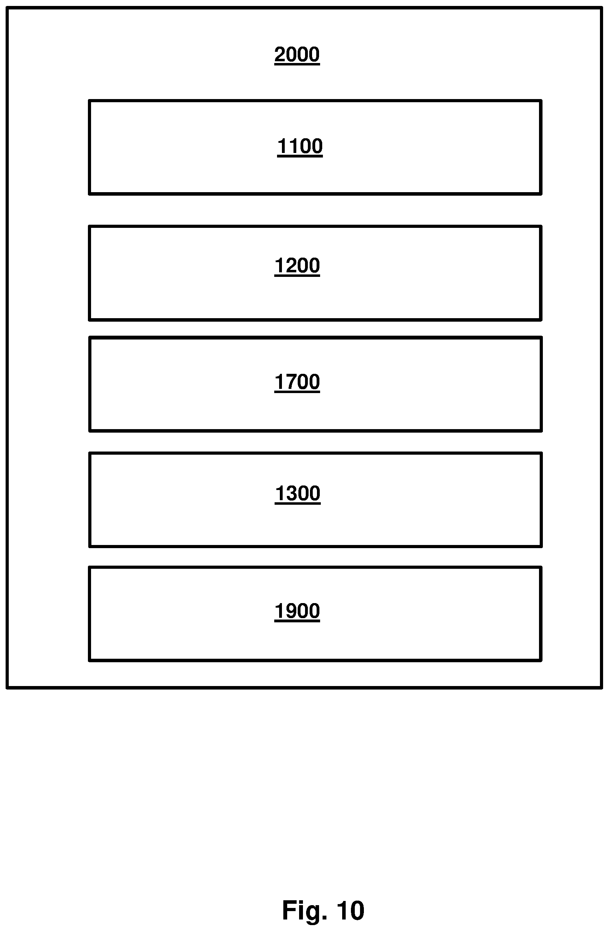

Fig. 10 illustrates a method of placing 2000 a base 710 of a gas cylinder 700 at a designated position 70.

The gas cylinder 700 having a cylinder body 720 with a valve 730.

The method 2000 comprising acts of:
- providing 1100 a dual-gripper 10 comprising a picking gripper 100 and a large gripper 300 on a floor based industrial robot 90;
- moving 1200 the gas cylinder 700 to the vicinity of the designated position 70 with the industrial robot 90;
- orienting 1810 the gas cylinder 700 substantially vertically with the industrial robot 90 whilst held by the large gripper 300;
- engaging 1300 the picking gripper 100 to the valve 730; and
- lowering 1900 the gas cylinder 700 by the picking gripper 100 so the base 710 is at the designated position 70.

In an embodiment of the method 2000, the act of engaging 1300 the picking gripper 100 to the valve 730 is performed by sensing 1310 the relative positioning between the picking gripper 100 and the gas cylinder 700 by sensory means 500.

In an embodiment of the method 2000, the act positioning 1200 the picking gripper 100 above the valve 730 is performed by recognizing 1210 a position of a valve 730 on a gas cylinder 700 by use of an image recognition system 550.

## Claims

1. A method for handling (1000) a gas cylinder (700) with a base (710) placed on a support (80) and a cylinder body (720) with a valve (730), the method (1000) comprising acts of:
- providing (1100) a dual-gripper (10) comprising a picking gripper (100) and a large gripper (300) arranged on an industrial robot (90);
- positioning (1200) the picking gripper (100) above the valve (730);
- engaging (1300) the picking gripper (100) to the valve (730);
- lifting (1400) the gas cylinder (700) with the picking gripper (100) so the base (710) is off the support (80);
- gripping (1500) the cylinder body (720) with the large gripper (300);
- moving (1700) the gas cylinder (700) with the industrial robot (90).

2. The method (1000) according to claim 1, wherein the act of engaging (1300) the picking gripper (100) is performed by engaging (1300) with a hand wheel (734) of the valve (730).

3. The method (1000) according to claim 1 or 2, wherein the act of gripping (1500) is preceded by an act of displacing (1600) the gas cylinder (700) towards the large gripper (300) whilst being engaged by the picking gripper (100).

4. The method (1000) according to any one or more of claims 1 to 3, further comprising an act of releasing (1800) the gas cylinder (700) selectively in a substantially horizontal orientation (750) or in a substantially vertical orientation (760).

5. The method (1000) according to claim 4, wherein the act of releasing (1800) the gas cylinder (700) is in a substantially vertical orientation (750) performed by
- orienting (1810) the gas cylinder (700) substantially vertically by the industrial robot (90) whilst held by the large gripper (300);
- engaging (1300) the picking gripper (100) to the valve (730);
- lowering (1900) the gas cylinder (700) by the picking gripper (100) so the base (710) is at a designated position (70).

6. A method of placing (2000) a base (710) of a gas cylinder (700) at a designated position (70), the gas cylinder (700) having a cylinder body (720) with a valve (730), the method (2000) comprising acts of:
- providing (1100) a dual-gripper (10) comprising a picking gripper (100) and a large gripper (300) on an industrial robot (90);
- moving (1200) the gas cylinder (700) to the vicinity of the designated position (70) with the industrial robot (90);
- orienting (1700) the gas cylinder (700) substantially vertically with the industrial robot (90) whilst held by the larger gripper (300);
- engaging (1300) the picking gripper (100) to the valve (730); and
- lowering (1900) the gas cylinder (700) with the picking gripper (100) so the base (710) is at a designated position (70).

7. The method (1000, 2000) of any one or more of claims 1 to 5, or claim 6, wherein the act of engaging (1300) the picking gripper (100) to the valve (730) is performed by sensing (1310) the relative positioning between the picking gripper (100) and the gas cylinder (700) by sensory means (500).

8. The method (1000, 2000) of any one or more of claims 1 to 7, wherein the act of positioning (1200) the picking gripper (100) above the valve (730) is performed by recognizing (1210) a position of a valve (730) on a gas cylinder (700) by use of an image recognition system (550).

9. A dual-gripper (10) for picking and gripping a gas cylinder (700) having a cylinder body (720) extending in a longitudinal direction (722) and a valve (730), the dual gripper (10) being configured for attachment to an arm (92) of an industrial robot (90), the dual-gripper comprising:
- a large gripper (300) comprising large gripping means (310) for gripping around a gripping axis (302) and
- a picking gripper (100) configured to engage with a valve (730) of a gas cylinder (700) and to displace the gas cylinder in a picking direction (102) substantially parallel to the gripping axis (302).

10. The dual gripper (10) according to claim 9, wherein the picking gripper (00) extends along the picking direction (102) and comprises along the picking direction (102)
- a linear picking actuator (110) being operatively connected to
- a pair of lower arms (130I, 130II) having rotation points (132I, 132II) on opposing sides of the picking axis (102), the pair of lower arms (130I, 130II) operatively connected to
- a pair of opposing sleds (140I, 140II) being slideable connected to a rail (142) extending perpendicular to the picking direction (102), wherein the sleds (140I, 140II) slide by the rotation of the pair of lower arms (140I, 140II), the pair of sleds (140I, 140II) having opposing picking fingers (1501, 150II) extending substantially parallel to the picking direction (102) and being adapted for engaging with a valve (730), a hand wheel (734) or a valve guard (732).

11. The dual gripper (10) according to claim 9 or 10, wherein the dual-gripper (10) further comprises a linear displacement actuator (20) connected to the picking gripper (100) and configured for displacement of the picking gripper (100) substantially perpendicular to the picking direction (102) between the gripping axis (302) and an extended picking position (104).

12. The dual gripper (10) according to any one or more of claims 9-11, wherein the picking gripper (100) further comprises sensor means (500) for sensing the relative positioning between the picking gripper (100) and a gas cylinder (700).

13. The dual gripper (10) according to any one or more of claims 9-12, wherein the picking gripper (100) further comprises a pair of upper arms (120I, 120II) interconnecting the picking actuator (110) and the pair of lower arms (130I, 130II), the pair of upper arms (120I, 120II) being displaceable between a parallel position (122), where the pair of upper arms (120I, 120II) are perpendicular to the picking direction (102) and a V- position (124) where the upper arms (120I, 120II) are extending substantially towards the picking actuator (110).

14. A computer program product comprising instructions to cause an industrial robot (90) with a dual gripper (10) according to any one or more claims 9 to 13 to execute the acts of method (1000, 2000) of any one or more of claims 1 to 8.

15. A computer-readable medium having stored thereon the computer program of claim 14.
